# EUROPÄISCHE PATENTANMELDUNG

(11) **EP 1 837 064 A1**
(43) Veröffentlichungstag der Anmeldung: **26.09.2007**
(21) Anmeldenummer: 06005940.9
(22) Anmeldetag: 23.03.2006
(51) Int. Cl.: B01D 39/08

(54) **Gewebe**

(71) Anmelder: Sefar AG, 8803 Rüschlikon (CH)
(72) Erfinder: Maurer, Christoph, 8044 Zürich (CH)
(74) Vertreter: Wunderlich, Rainer

(57) **Zusammenfassung**

Die Erfindung betrifft ein Gewebe mit einer dehnbaren Gewebestruktur, welches ein hochelastisches und ein niederelastisches Garn aufweist, wobei die Elastizität des hochelastischen Garnes und des niederelastischen Garnes unterschiedlich ausgewählt sind, so dass beim bestimmungsgemäßen Dehnen eine gezielte Relativbewegung zwischen dem hochelastischen und dem niederelastischen Garn gegeben ist. Erfindungsgemäß enthält das niederelastische Garn ein Polyacetal, insbesondere ein Polyoxymethylen.

## Beschreibung

Die Erfindung betrifft ein Gewebe nach dem Oberbegriff des Patentanspruchs 1.

Die Erfindung betrifft insbesondere ein Gewebe mit einer dehnbaren Gewebestruktur, die ein erstes hochelastisches Garn und ein zweites niederelastisches Garn aufweist, das eine Elastizität besitzt, die geringer als die des hochelastischen Garnes ist, wobei die Elastizität des hochelastischen Garnes und des mindestens einen weiteren niederelastischen Garnes unterschiedlich ausgewählt sind, so dass beim bestimmungsgemäßen Dehnen eine gezielte Relativbewegung zwischen dem ersten Garn und dem zweiten Garn gegeben ist.

Die EP-B-1 232 780 beschreibt ein Filtertuch für eine kuchenbildende Filtration mit einem Filtrationsbereich, der eine dehnbare Gewebestruktur aufweist. Diese besteht aus einem hochelastischen Monofilgarn, welches eine bestimmte Elastizität besitzt, und zumindest einem weiteren Garn. Das weitere Garn besitzt dabei eine Elastizität, die geringer als die des hochelastischen Monofilgarnes ist. Durch das Monofilgarn und das weitere Garn wird eine Gewebestruktur mit einer definierten Elastizität gebildet, welche eine größere Dehnung der Gewebestruktur als die des daraus gebildeten Filterkuchens ermöglicht. Ferner sind die Elastizität des hochelastischen Monofilgarnes und des mindestens einen weiteren Garnes derart unterschiedlich ausgewählt, dass beim bestimmungsgemäßen Dehnen eine definierte Relativbewegung zwischen den Garnen unterschiedlicher Eleastizität erfolgt.

Ein Gewebe mit einem hochelastischen Garn ist aus der US-A-6,030,905 bekannt. Hierin werden verschiedene hochelastische Garne mit einer Elastizität von 60 % und mehr beschrieben. Das konkret beschriebene hochelastische synthetische Garn besteht aus zumindest 70 % eines thermoplastischen elastomeren Copolyetherester. Dieser thermoelastische elastomere Copolyetherester enthält mindestens 95 % eines ganz speziellen Polymers. Die Dehnbarkeit dieses hochelastischen Garnes ist mit bis zu 110 % angegeben.

Der Erfindung liegt die **Aufgabe** zugrunde, ein Gewebe bereitzustellen, welches einen besonders hohen Selbstreinigungseffekt aufweist.

Diese Aufgabe wird durch ein Gewebe gemäß Anspruch 1 gelöst. Vorteilhafte Ausgestaltungen sind in den abhängigen Ansprüchen ausgeführt.

Das Gewebe nach der Erfindung ist dadurch gekennzeichnet, dass das zweite niederelastische Garn ein Polyacetal, insbesondere Polyoxymethylen, enthält.

Durch die erfindungsgemäßen Merkmale wird ein Gewebe bereitgestellt, das in sehr hohem Maße Partikeleinlagerungen entgegenwirkt.

Der Selbstreinigungseffekt basiert grundsätzlich auf den unterschiedlichen Elastizitäten der verwendeten hoch- und niederelastischen Garne. Bei einer mechanischen Verformung dehnen sich die hochelastischen Garne stärker aus als die niederelastischen Garne, wodurch sich diese beiden Garnarten zueinander bewegen können und somit eine Relativbewegung entsteht. Ein Teilchen, welches insbesondere mit beiden Garnsystemen in Kontakt steht, kann dadurch eine Krafteinwirkung erfahren und von dem Gewebe abgestreift oder gelöst werden.

Erfindungsgemäß weist das zweite niederelastische Garn Polyoxymethylen auf. Dieses bildet eine sehr glatte Oberfläche und sorgt damit für einen sehr niedrigen Friktionskoeffizienten. Feinpartikel können sich daher auf diesem Garn nur schwer ablagern.

Darüber hinaus führt der niedrige Friktionskoeffizient zu einer geringen Reibung zwischen den Garnen. Die aufgrund der unterschiedlichen Elastizitäten ermöglichte Relativbewegung zwischen den Garnen kann sich so besonders stark ausbilden. All dies verbessert die Selbstreinigung ganz maßgeblich.

Neben einem verbesserten Selbstreinigungseffekt durch die verstärkte Relativbewegung ergibt sich auch ein hervorragendes Verschleißverhalten. Es wird der Verschleiß des Gewebes insbesondere beim Aneinanderreiben der Garne verringert und die Lebensdauer des Gewebes erhöht.

Weiterhin erleichtert die glatte Oberfläche den Abwurf eines darauf gebildeten Filterkuchens, wenn das Gewebe als Filtermedium verwendet wird. Somit können aufwändige mechanische Vorrichtungen zum Ablösen des Filterkuchens vermindert werden oder ganz entfallen. Dies mindert nicht nur Investitions- und Wartungskosten, sondern schont auch das Gewebe, welches bei unmittelbarem Kontakt, etwa mit einem Rakelmesser, beschädigt oder verschlissen werden kann.

Durch das erfindungsgemäße Gewebe kann insbesondere durch ein Aufblähen oder vergleichbare Deformationen eine Relativbewegung zwischen den Fasern weiter verstärkt werden, wodurch der Selbstreinigungseffekt des Gewebes verbessert wird. Gerade feinste Partikeleinlagerungen, die sich bevorzugt an Überkreuzungen von Kett- und Schussfäden bilden und verhältnismäßig schwer zu entfernen sind, können bei dem erfindungsgemäßen Gewebe durch einfache Dehn- oder Walkbewegungen in besonders hohem Maße gelöst und entfernt werden.

Hierdurch werden insbesondere die Feststoffpartikel gelöst und abgestreift, die sich an den Kreuzungspunkten der Garne ablagern. Durch einfache mechanische Bewegungen wie Klopfen, Walken oder Durchleiten von Luft, kann das erfindungsgemäße Gewebe rasch von eingelagerten Feinstpartikeln befreit werden. Die Häufigkeit und Intensität einer eventuellen zusätzlichen Nassreinigung kann dadurch verringert werden, wobei die entsprechenden Reinigungskosten reduziert werden.

Darüber hinaus wird durch die geringere Häufigkeit der Nassreinigung unter Verwendung teils sehr aggressiver Reinigungschemikalien das Gewebe weniger belastet und somit ein kostenaufwändiger Materialverschleiß verringert. Auch die Umweltbelastung kann dadurch deutlich reduziert werden.

Das Polyoxymethylen, das vorzugsweise in dem zweiten niederelastischen Garn mit einem Anteil von 30 % bis 100 % enthalten ist, ist ein thermoplastischer Kunststoff, der durch Polymerisation von Formaldehyd gewonnen werden kann. Das Ausgangsmaterial Formaldehyd wird vorzugsweise durch eine Oxidation von Methanol erhalten, welches im großtechnischen Maßstab billig herzustellen ist.

Es kann auch ein niederelastisches Garn aus einem anderen Material verwendet werden, welches mit einer Beschichtung aus Polyoxymethylen versehen ist.

In einer bevorzugten Ausführungsform des erfindungsgemäßen Gewebes liegt das Polyoxymethylen in Form eines Copolymers vor. Copolymere besitzen gegenüber Homopolymeren eine höhere Chemikalien- und Thermostabilität. Insbesondere weisen Copolymere eine größere Resistenz gegenüber Alkalien auf und werden durch eine Langzeitaussetzung gegenüber Feuchtigkeit bei einer erhöhten Temperatur weniger beeinflusst. Die Copolymerisation erfolgt dabei vorzugsweise durch Trioxan mit beispielsweise 0,1 bis 15 mol/%, zyklischen Ethern wie Ethylenoxyd oder 1,3-Dioxolan. Bevorzugt wird die Copolymerisation des Trioxans in der Schmelze mit beispielsweise Bortriflurid/Dibutylether als Katalysator durchgeführt.

Durch die Wahl der weiteren Comonomerkomponenten können wesentliche Eigenschaften des Copolymeren, wie insbesondere Elastizität, Reibwiderstand, Abriebfestigkeit sowie Chemikalienfestigkeit gezielt beeinflusst werden. Geeignete Comonomere können ausgewählt sein aus Styrol, Acrylester, Acrylnitril, Amid, Butadien, Sulfonen und Ethersulfonen.

Es ist vorteilhaft, wenn das Polyoxymethylen eine Komponente eines Polymerblends ist. Durch Kombination mit anderen Polymeren eröffnet sich ein breiteres Spektrum an mechanischen und physikalisch-chemischen Eigenschaften, die dem niederelastischen Garn verliehen werden können. So lassen sich beispielsweise durch Kombination mit thermoplastischen Polyurethanelastomeren Polymerblends mit hoher Schlagzähigkeit herstellen. Als Polymerblendkomponente eignen sich insbesondere auch andere Thermoplaste wie Polyamide, Polystyrole und Polyethylene.

Bevorzugt sind in dem Gewebe weitere hochelastische und/oder niederelastische Garne vorgesehen. Damit können die mechanischen Eigenschaften des Gewebes, insbesondere die Dehnbarkeit definiert variiert und auch lokal unterschiedlich angepasst werden.

Insbesondere lassen sich mit Kombinationen von Garnen unterschiedlicher Elastizität beliebige gewünschte Elastizitätsprofile erzeugen. Auch eine stark richtungsabhängige Elastizität ist erzeugbar, was beispielsweise in einer Verwendung als Filterband von Vorteil ist. Ferner kann dadurch die Permeabilität des Gewebes für verschiedene Medien gezielt verändert werden. Darüber hinaus können zu dem Polymer des niederelastischen Garnes weitere Additive wie Glasfasern, Mineralien, Gleitmittel, Pigmente, leitende Füllstoffe ode Stabilisatoren hinzugefügt werden, um die Stabilität, Farbe, Gleitwiderstand oder elektrische Leitfähigkeit gezielt einzustellen.

Das hochelastische Garn ist bevorzugt aus Polyester, Polyurethan, Polyolefin, Polyamid und/oder deren Copolymeren, insbesondere Copolyetherester, gefertigt. Es handelt sich bei Copolyetherester um ein synthetisches Copolymer, welches bezüglich Festigkeit, Bruchdehnung, Knotenfestigkeit und insbesondere bezüglich der Dauerelastizität hervorragende Eigenschaften aufweist.

In einer weiteren bevorzugten Ausführungsform weisen das hochelastische Garn einen Zugspannungskoeffizienten C₁₀₀ von mindestens 0,50, vorzugsweise zwischen 0,60 und 0,90 und das niederelastische Garn einen Zugspannungskoeffizienten C₁₀₀ von geringer als 0,50, vorzugsweise zwischen 0,1 und 0,3, auf. Vorzugsweise beträgt das Verhältnis der Elastizität der unterschiedlichen Garne 2:1 und größer. Der Zugspannungskoeffizient Cₙ kann gemäß DIN 53835 bestimmt werden und ist ein Maß für die Elastizität und die Langzeit-Dimensionsstabilität des Garnes, wobei n die Anzahl der Dehnungszyklen angibt.

Bei diesen unterschiedlichen Elastizitäten für das hochelastische und das niederelastische Garn wird eine ausreichend hohe Relativbewegung zwischen den einzelnen Garnarten bewirkt. Als Fasermaterial für das hochelastische Garn ist kann etwa das Material Elas-Ter (eingetragene Marke der Hoechst Trevira GmbH & Co. KG) verwendet werden. Auch andere Monofilamente aus einem thermoplastischen elastomeren Copolyetherester sind einsetzbar, welche einen Zugspannungskoeffizienten C₁₀₀ von etwa 0,7 aufweisen.

Weiter ist es vorteilhaft, wenn das hochelastische Garn und/oder das niederelastische Garn als Monofilgarne vorliegen. Da die Monofilgarne sehr glatte Oberflächen aufweisen, ist die Einlagerung kleiner Partikel im Gewebegefüge deutlich reduziert, so dass Monofilgewebe eine spürbar geringere Tendenz zum Verstopfen aufweisen und sich außerdem besser reinigen lassen. Beispielsweise können durch Durchleiten eines Druckluftstoßes Restbestände von Feinstoffanteilen im Gewebe ausgeblasen werden.

Insbesondere Monofilamente aus Polyoxymethylen weisen eine Reihe von sehr vorteilhaften Eigenschaften auf.

Zunächst ist das Modul im Bereich von 4 - 8 N/tex einstellbar. Ferner kann auch die Bruchdehnung im Bereich von 5 - 20 % eingestellt werden. Darüber hinaus ist es möglich, die Fasern mit einem Durchmesser im Bereich von 0,04 bis ca. 0,4 mm zu fertigen.

Aufgrund dieser guten Variabilität einer Reihe von wesentlichen mechanischen Eigenschaften kann das Gewebe gezielt für spezifische Anwendungen optimiert werden.

Ein weiterer wesentlicher Vorteil des erfindungsgemäßen Gewebes kann darin gesehen werden, dass monofile Elastikgewebe eine bedeutend geringere Elastizitätsermüdung als multifile Elastikgewebe aufweisen. Das heißt, dass die monofilen Elastikgewebe ihre formrückbildenden Eigenschaften über einen längeren Zeitraum beibehalten und dass Gewebedeformationen aufgrund von permanenten Überdehnungen vermieden werden können. Auf diese Weise kann einer Faltenbildung im Gewebe und damit einem vorzeitigen Gewebebruch vorgebeugt werden.

Schließlich weisen Gewebe aus Monofilgarn auch im Hinblick auf die Abriebfestigkeit deutliche Verbesserungen im Vergleich zu Geweben aus multifilen elastischen Garnen auf.

Bei einer besonders einfachen Ausgestaltung der Erfindung sind die Kettfäden der Gewebestruktur aus dem niederelastischen Garn und die Schussfäden aus dem hochelastischen Garn gebildet.

Ein derartiges Gewebe weist eine stark richtungsabhängige Elastizität auf, was beispielsweise in einer Verwendung als Filterband von Vorteil sein kann.

Erheblich verbesserte Reinigungseigenschaften des Gewebes können schließlich dadurch erzielt werden, dass zumindest eine Oberfläche des Gewebes zur Vergütung der Oberfläche kalandriert oder mit einer Beschichtung versehen ist. Daneben können die jeweiligen Garne auch mit einer zusätzlichen Antihaftbeschichtung versehen sein.

Die Gewebestruktur weist vorzugsweise Körper- und/oder Atlasbindungen auf. Für den Fall, dass besondere mechanische Eigenschaften des Gewebes oder besondere Permeationseigenschaften gefordert sind, sind auch doppel- und mehrlagige Gewebe in verschiedenen Gewebebindungen machbar. Mit Kombinationen von elastischen und regulären Garnen in allen Geweberichtungen und/oder abwechslungsweise in einer bestimmten Richtung können beliebige gewünschte Elastizitätsprofile erzeugt werden.

Das erfindungsgemäße Gewebe kann zur Fertigung eines Filtermediums, insbesondere eines Filterbeutels für Scheibenfilter eingesetzt werden.

Bei einem Filtermedium wird in bestimmten Fällen ein ballonartiges Aufblähen zum Abwerfen eines Filterkuchens bewirkt. Diese Effekte können durch den Einsatz hochelastischer Garne, insbesondere Monofilgarne, deutlich verstärkt werden. So sind bei dem erfindungsgemäßen Filtermedium Flächendehnungen von ΔA: A >= 0,02 möglich. Im Fall eines Filtermediums mit einer Filterbeutelgeometrie ist dieser scheibensegmentförmig konfektioniert. Die schmale Öffnung am Fuß des Beutels kann aufgrund des elastischen Materials bei weiterhin guter Anlage an einer Stützfläche auf ein Segmentgerüst aufgezogen werden.

Die Erfindung ist bevorzugt auf Filtern der kuchenbildenden Filtration anwendbar, bei denen eine Einrichtung zum Abblasen des Filterkuchens von der Rückseite des Filtrationskuchens vorgesehen ist.

Zum Abheben eines Filtrationsbereiches des Filtermediums von einer Stützfläche kann zumindest in dem Filtrationsbereich eine dehnbare Gewebestruktur vorgesehen sein. Zumindest in dem Filtrationsbereich können in die Gewebestruktur gezielt nieder- und hochelastische Monofilgarne gemäß der Erfindung eingearbeitet sein.

Bei einer weiteren Ausgestaltung des erfindungsgemäßen Filtermediums ist die Gewebestruktur in dem Filtrationsbereich aufblähbar ausgebildet. Insbesondere kann dabei eine ballonartige Aufblähbarkeit vorgesehen sein. Das Lösen des Filterkuchens erfolgt dabei nicht durch die ausströmende Luft, sondern auch durch die erhebliche Dehnung der Filterkuchenfläche. Die Dehnung kann zwischen 2 % und 80 % gewählt werden, wobei diese Dehnung größer als die des Filterkuchens ist. Es kann zudem eine weitere Selbstreinigung des Filtermediums aufgrund eines Balloneffektes erzielt werden, wobei als Ursache für diesen Selbstreinigungseffekt ein Walkvorgang zwischen benachbarten Garnen im Filtertuch, d.h. eine Relativbewegung von benachbarten Garnen, angesehen werden kann.

Die Erfindung ist bevorzugt auf Filtern der kuchenbildenden Filtration anwendbar, bei denen eine Einrichtung zum Abblasen des Filterkuchens von der Rückseite des Filtrationsbereiches vorgesehen ist.

## Patentansprüche

1. Gewebe mit einer dehnbaren Gewebestruktur, welche ein erstes hochelastisches Garn und ein zweites niederelastisches Garn aufweist, das eine Elastizität besitzt, die geringer als die des hochelastischen Garnes ist, wobei die Elastizität des hochelastischen Garnes und des mindestens einen weiteren niederelastischen Garnes unterschiedlich ausgewählt sind, so dass beim bestimmungsgemäßen Dehnen eine gezielte Relativbewegung zwischen dem ersten Garn und dem zweiten Garn gegeben ist,
**dadurch gekennzeichnet,**
**dass** das zweite niederelastische Garn ein Polyacetal, insbesondere ein Polyoxymethylen, enthält.

2. Gewebe nach Anspruch 1,
**dadurch gekennzeichnet,**
**dass** das Polyoxymethylen in Form eines Copolymers vorliegt.

3. Gewebe nach Anspruch 1 oder 2,
**dadurch gekennzeichnet,**
**dass** das Polyoxymethylen eine Komponente eines Polymerblends ist.

4. Gewebe nach einem der Ansprüche 1 bis 3,
**dadurch gekennzeichnet,**
**dass** weitere hochelastische und/oder niederelastische Garne vorgesehen sind.

5. Gewebe nach einem der Ansprüche 1 bis 4,
**dadurch gekennzeichnet,**
**dass** das hochelastische Garn einen Zugspannungskoeffizienten C₁₀₀ von mindestens 0,50, vorzugsweise zwischen 0,60 und 0,90, und das niederelastische Garn einen Zugspannungskoeffizienten C₁₀₀ von geringer als 0,50, vorzugsweise zwischen 0,1 und 0,3, aufweist.

6. Gewebe nach einem der Ansprüche 1 bis 5,
**dadurch gekennzeichnet,**
**dass** das hochelastische Garn und/oder das niederelastische Garn als Monofilgarne vorliegen.

7. Gewebe nach einem der Ansprüche 1 bis 6,
**dadurch gekennzeichnet,**
**dass** die Kettfäden der Gewebestruktur aus dem niederelastischen Garn und die Schussfäden aus dem hochelastischen Garn gebildet sind.

8. Gewebe nach einem der Ansprüche 1 bis 7,
**dadurch gekennzeichnet,**
**dass** zumindest eine Oberfläche des Gewebes zur Vergütung der Oberfläche kalandriert oder mit einer Beschichtung versehen ist.

9. Gewebe nach einem der Ansprüche 1 bis 8,
**dadurch gekennzeichnet,**
**dass** die Gewebestruktur Körper- und/oder Atlasbindungen aufweist.

10. Filtermedium, insbesondere Filterbeutel für Scheibenfilter, welches ein Gewebe nach einem der Ansprüche 1 bis 9 aufweist.
